# EUROPÄISCHE PATENTSCHRIFT

(11) **EP 1 518 791 B1**
(45) Veröffentlichungstag und Bekanntmachung des Hinweises auf die Patenterteilung: **24.06.2009**
(21) Anmeldenummer: 04015215.9
(22) Anmeldetag: 29.06.2004
(51) Int. Cl.: B65D 1/00, B65D 85/84, B65D 88/74, B01L 1/00

(54) **Behälter für aggressive Flüssigkeiten mit Heiz- und/oder Kühlmöglichkeit**
Container for aggressive liquids with heat and/or cooling means
Recipient pour liquides agressifs avec des moyens de chauffage et/ou refroidissement

(30) Priorität: 19.09.2003 DE 20314557 U
(43) Veröffentlichungstag der Anmeldung: 30.03.2005
(73) Patentinhaber: Sauermann, Franz, 86558 Freinhausen (DE)
(72) Erfinder: Sauermann, Franz, 86558 Freinhausen (DE)
(74) Vertreter: TBK-Patent

(56) Entgegenhaltungen:
- DE-A- 10 164 408
- US-A1- 2002 003 104
- PATENT ABSTRACTS OF JAPAN Bd. 1996, Nr. 04, 30. April 1996 (1996-04-30) & JP 7 315483 A (FUJI KAKO KK), 5. Dezember 1995 (1995-12-05)

## Beschreibung

Die Erfindung bezieht sich auf einen Behälter für aggressive Flüssigkeiten mit einer Möglichkeit, die Flüssigkeit zu erwärmen oder zu kühlen.

Soll ein Behälter für aggressive Flüssigkeiten verwendet werden, scheidet eine Reihe von Materialien von vornherein aus. Ein geeigneter Behälter muss eine hohe Widerstandsfähigkeit aufweisen und Lecks müssen sicher vermieden werden, insbesondere wenn der Behälter über längere Zeit in einem sicherheitsrelevanten Bereich betrieben werden soll. Ein derartiger Behälter kann für Flüssigkeiten verwendet werden, die unterhalb einer bestimmten Grenztemperatur in einen festen Zustand übergehen (gefrieren). Es können aber auch Flüssigkeiten aufgenommen werden, bei denen gewährleistet werden muss, dass diese sich nicht über eine bestimmte Temperatur erwärmen. Um ein unerwünschtes Einfrieren der Flüssigkeit, wodurch diese nicht mehr zur Verfügung steht, oder ein unerwünschtes oder sogar gefährliches Erwärmen der Flüssigkeit über eine bestimmte Grenztemperatur zu verhindern, soll eine Möglichkeit zum Erwärmen oder Kühlen der Flüssigkeit gegeben sein. Dabei muss selbstverständlich eben gerade bei aggressiven Flüssigkeiten darauf geachtet werden, dass eine derartige Einrichtung zum Kühlen oder Erwärmen der Flüssigkeit nicht durch die aggressive Flüssigkeit angegriffen wird.

Der Erfindung liegt die Aufgabe zugrunde, einen einfach und kostengünstigen Behälter für aggressive Flüssigkeiten zu schaffen, der einerseits eine sichere Aufnahme der Flüssigkeit auch über eine längere Betriebsdauer gewährleistet und andererseits es erlaubt, die Flüssigkeit zu erwärmen oder abzukühlen.

Diese Aufgabe wird durch die Merkmale des Anspruchs 1 gelöst.

Gemäß der Erfindung wird der Behälter aus einem Kunststoffmaterial mittels Rotationssinterverfahren hergestellt. Der Behälter wird somit als einstückiger Hohlkörper hergestellt, wodurch dauerhaft und zuverlässig vermieden wird, dass Leckstellen an Elementen auftreten, die zum Verschließen des Behälters zusammengefügt wurden. Durch die einstückige Ausbildung des Behälters ist die Dichtheit des Behälters praktisch unbegrenzt gewährleistet. Durch die Herstellung des Behälters mittels eines Rotationssinterverfahrens wird darüber hinaus gewährleistet, dass der Behälter mit einer relativ geringen Toleranz eine weitgehend einheitliche Wandstärke in der gewünschten Dimension aufweist. Leckagen aufgrund zu geringer Wandstärke und im Betrieb des Behälters auftretende Risse oder Brüche sind nicht zu befürchten. Zur Erwärmung oder Kühlung der in dem Behälter aufgenommenen Flüssigkeit ist ein Rohr aus Metall vorgesehen, das in eine Wand des Behälters eingearbeitet ist, wobei das Rohr im Bereich des Innenraums des Behälters und bevorzugt sogar vollständig vom Kunststoffmaterial, aus dem der Behälter hergestellt ist, umhüllt wird.

Durch die Verwendung eines Rohrs aus Metall lässt sich einerseits ein guter Wärmeübergang einer zu Kühl- oder Heizzwecken durch das Rohr strömenden Flüssigkeit auf den Behälter bzw. auf die in dem Behälter befindliche Flüssigkeit erreichen, zum anderen wird durch die Umhüllung aus Kunststoffmaterial das Rohr sicher vor der aggressiven Flüssigkeit geschützt. Zwar wird durch die Umhüllung aus Kunststoffmaterial der Wärmeübergang beeinträchtigt, durch geeignete Wahl des Materials und der Wandstärke kann jedoch zum einen ein hinreichender Wärmeübergang und zum anderen ein hinreichender Schutz vor der aggressiven Flüssigkeit erreicht werden.

Durch das Umhüllen des Rohrs mit Kunststoffmaterial bzw. das Einbetten des Rohrs mittels des Kunststoffmaterials in eine Behälterwand wird das Rohr auch zuverlässig befestigt und ein Losbrechen des Rohres oder das Entstehen von Rissen und dgl. aufgrund von Vibrationen oder mechanischen Belastungen zuverlässig verhindert.

Vorteilhaft weist das Rohr einen runden Querschnitt auf, was einerseits eine einfache Fertigung ermöglicht, andererseits den Anschluss an Leitungssysteme erleichtert. Wie ausgeführt, soll der Behälter auch für Flüssigkeiten geeignet sein, die ab einer bestimmten Grenztemperatur einfrieren, und es muss vermieden werden, dass durch Einfrieren der Flüssigkeit der Behälter beschädigt wird. Da der Behälter aus Kunststoffmaterial hergestellt ist, weist er grundsätzlich eine gewisse Flexibilität auf, die eine gewisse Expansion des Behälters ermöglicht, so dass nicht befürchtet werden muss, dass der Behälter durch Einfrieren gesprengt wird. Besteht das verwendete Rohr aus Metall, weist dieses jedoch eine wesentlich geringere Flexibilität auf und es muss vermieden werden, dass es durch Einfrieren der Flüssigkeit aufgrund der Steifigkeit des Rohrs insbesondere in dem Bereich, in dem das Rohr vorgesehen ist, zu Schäden kommt. Um derartige Frostschäden zu vermeiden, wird das Rohr bzw. die Umhüllung des Rohrs vorteilhaft so gestaltet, dass keinerlei Hinterschneidungen auftreten, in denen sich die gefrierende Flüssigkeit sammeln könnte und es bei Expansion durch den Übergang in den festen Aggregatzustand zum Sprengen von Bereichen des Behälters kommt. Vielmehr werden Hinterschneidungen vermieden, wodurch erreicht wird, dass die gefrierende Flüssigkeit bei Volumenerweiterung ausweichen kann, ohne dass Frostschäden entstehen.

Zweckmäßig ragt zumindest ein Teil des Rohrs in den Innenraum des Behälters, um einen guten Wärmeübergang zu erreichen. Die Umhüllung des Rohrs wird vorteilhaft so ausgeführt, dass die Umhüllung schräg zur Behälterwand ausläuft, um es der gefrierenden Flüssigkeit zu ermöglichen, auszuweichen und so Frostschäden zu verhindern. Diese Gestaltung wird näher anhand eines bevorzugten Ausführungsbeispiels erläutert.

Vorteilhaft ist das Rohr so in den Behälter eingebettet, dass es, wie ausgeführt, auf der Innenseite der Behälterwand in den Innenraum des Behälters vorsteht, auf der Außenseite des Behälters jedoch bündig eingebettet ist, so dass auf der Außenseite des Behälters sich eine glatte Fläche ergibt, wodurch der Behälter eine ansprechende Form gewinnt und einfach verbaut werden kann, ohne dass die Gefahr besteht, dass sich andere Bauteile an der Behälteraußenwand verhängen.

Gemäß einer vorteilhaften Weiterbildung ist der Innenraum des Behälters mit einer zweiten Kunststoffschicht versehen, die eine schaumartige Struktur aufweist, um eine erhöhte Isolation des Behälters zu erreichen. Diese Kunststoffschicht wird zweckmäßig ebenfalls durch das genannte Rotationssinterverfahren eingebracht und kann ebenfalls das Rohr umhüllen. Bei einer derartigen Umhüllung des Rohrs wird angestrebt, dass die Stärke der zweiten isolierenden Kunststoffschicht zumindest im Bereich des Rohrs nicht einheitlich ist, sondern in bestimmten Bereichen um einen guten Wärmeübergang zu erzielen, relativ gering ist, in anderen Bereichen u.U. jedoch wesentlich stärker ist, um Hinterschneidungen und dgl. zu vermeiden. Dabei wird ein abgeflachter schräger Übergang von den Rohren zur Behälterwand angestrebt, was mit dem folgend beschriebenen bevorzugten Ausführungsbeispiel deutlicher erläutert werden wird.

Es kann zweckmäßig sein, mehrere Kunststoffschichten aufzubringen. Wird bspw. als zweite isolierende Kunststoffschicht eine offenporige schaumartige Struktur verwendet, ist diese zweckmäßig durch eine weitere, also dritte Kunststoffschicht mit einer geschlossenen Struktur abzudecken. Auch aus anderen Gründen, sowohl Festigkeits- als auch Isolationsgründen, aber auch um eine hinreichende Widerstandsfähigkeit gegen die aufzunehmende Flüssigkeit zu erzielen, kann ein mehrschichtiger Aufbau mit zwei, drei oder noch mehr Schichten zweckmäßig sein.

Um den Wärmeübergang von dem genannten Rohr zu der Flüssigkeit zu verbessern, kann es vorteilhaft sein, das Rohr nicht gerade durch den Behälter zu führen, sondern geschwungen in Biegungen, um so eine größere Rohrlänge im Behälter unterzubringen. Eine derartige schlangenförmige Führung des Rohrs kann nahezu beliebig ausgeführt werden, wobei selbstverständlich eine einfache kostengünstige Fertigung im Auge zu behalten ist. Bewährt hat sich grundsätzlich eine mäanderförmige Rohrführung. Bei der Rohrführung ist jedoch ebenfalls zu beachten, dass beim Einfrieren der Flüssigkeit eine Expansion der Flüssigkeit auftritt und zu vermeiden ist, dass durch die Schlingen oder Schlaufen des Rohrs Flüssigkeit eingeschlossen wird und beim Einfrieren Frostschäden verursacht.

Grundsätzlich ist eine Rohrführung zu bevorzugen, bei der der Flüssigkeit im Prozess des Einfrierens Raum zur Expansion gegeben wird. Dies ist grundsätzlich bei einer schlingenförmigen bzw. mäanderförmigen Rohrführung gegeben. Die Ausweichmöglichkeiten des gefrierenden Flüssigkeitsvolumens kann jedoch noch weiter verbessert werden, wenn Rohrbiegungen mit einer Richtungsänderung von unter 180° realisiert werden. Bei Rohrbiegungen mit einer Richtungsänderung von über 180° werden zwangsläufig teilweise eingeschlossene Bereiche erzeugt, die das Ausweichen der einfrierenden Flüssigkeit erschweren. Auch bei einer Richtungsänderung von 180° und einer in Teilbereichen somit U-förmigen Rohrführung besteht das Risiko, dass die einfrierende expandierende Flüssigkeit eine zu große Kraft auf die Schenkel des U ausübt und es zu Frostschäden kommt, oder die Gesamtsteifigkeit des Systems relativ hoch ausgelegt werden muss, um Schäden sicher vermieden werden. Wird dagegen eine Richtungsänderung in den Biegungen von 180°, bevorzugt 120° bis 160°, realisiert, ergibt sich keine U-förmige Gestalt der Schlingen, sondern eher eine V-Form und die einfrierende Flüssigkeit kann bei Volumenvergrößerung einfach in Richtung der Öffnung des V ausweichen.

Zum Anschluss an ein Leitungssystem muss das Rohr durch eine Behälterwand nach außen geführt werden. Wird der Behälter anmeldungsgemäß im Rotationssinterverfahren hergestellt, ergeben sich hier keine Dichtungsprobleme, da sich das Kunststoffmaterial beim Herstellungsprozess absolut dicht um das Rohr legt. Außerhalb des Behälters ist das Rohr bevorzugt mit Anschlussstücken zum Anschluss an ein entsprechendes Leitungssystem versehen.

Die Erfindung wird folgend näher anhand bevorzugter Ausführungsbeispiele erläutert.

Es zeigen:
Fig. 1 eine Draufsicht auf einen aufgeschnittenen Behälter eines ersten Ausführungsbeispiels.
Fig. 2 einen Querschnitt durch die das Rohr tragende Seitenwand des Behälters.
Fig. 3 einen Querschnitt gemäß Fig. 2 eines weiteren Ausführungsbeispiels.
Fig. 4 eine Draufsicht auf einen aufgeschnittenen Behälter eines weiteren Ausführungsbeispiels.
Fig. 5 dient zur Erläuterung der Erfindung, stellt jedoch kein Ausführungsbeispiel der Erfindung dar.

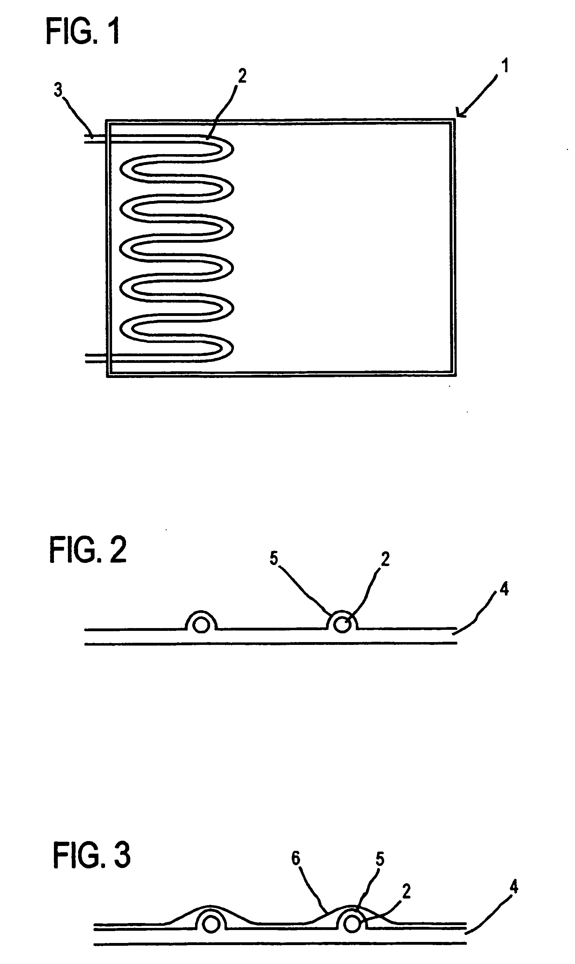

Für die Darstellung in Fig. 1 wurde der einstückige Hohlkörper aufgeschnitten und erlaubt somit die Draufsicht auf das am Boden des Behälters 1 vorgesehene Rohr 2 aus metallischem Material. Wie gut zu sehen, wird das Rohr 2 in Schlingenform durch den Behälter 1 geführt, um eine größere Rohrlänge auszunutzen und eine größere Rohrfläche für den Wärmeübergang zur Verfügung zu haben. An den Enden wird das Rohr durch eine Seitenwand des Behälters geführt und ist auf der Außenseite mit Anschlussstücken 3 versehen. Der Behälter 1 wird in einem an sich bekannten Rotationssinterverfahren hergestellt, das gewährleistet, dass der Behälter 1 einstückig als Hohlkörper ausgebildet wird und das im Behälter 1 vorgesehene Rohr 2 nicht gesondert an der Durchtrittsstelle durch die Behälterwand abgedichtet werden muss, sondern vielmehr das aufgeschmolzene Kunststoffmaterial sich absolut dicht um das Rohr 2 legt und aushärtet. Weiterhin wird durch das Rotationssinterverfahren eine weitgehend gleichförmige Wandstärke gewährleistet, wodurch eine Ermüdung des Behälters 1 an bestimmten Stellen mit folgender Rissbildung weitestgehend ausgeschlossen werden kann. Das Rohr 2 wird während des Rotationssinterverfahrens eingebracht und in eine Wand des Behälters 1 eingebettet, was näher anhand der Fig. 2 und 3 erläutert wird.

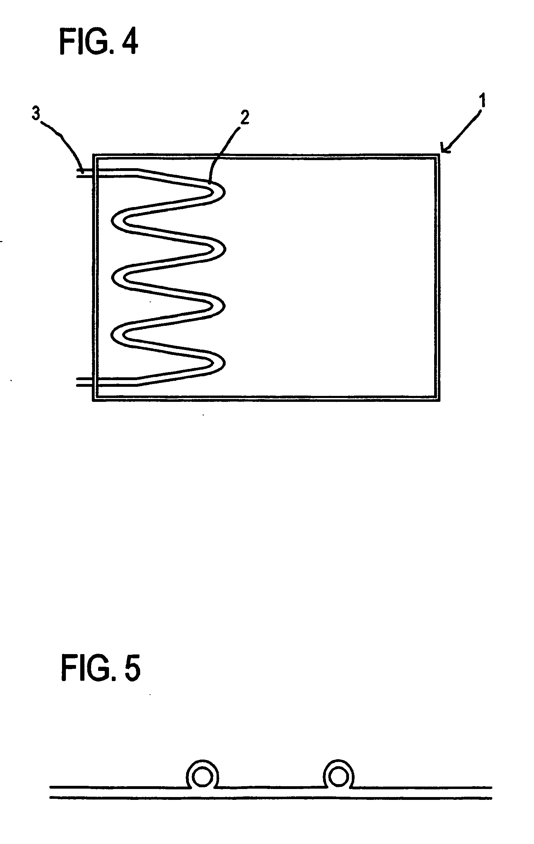

Fig. 2 zeigt einen Querschnitt durch die Wand 4 des Behälters 1, in der das Rohr 2 eingebettet ist. Wie gut aus dem Querschnitt zu sehen ist, wird das Rohr 2 dergestalt eingebettet, dass die Behälteraußenwand absolut eben ist, das Rohr 2 auf der Innenseite der Wand 4 jedoch deutlich in den Innenraum des Behälters 1 vorsteht, um einen guten Wärmeübergang vom Rohr 2 zur Flüssigkeit im Behälter 1 zu gewährleisten. Das Rohr 2 wird von dem Kunststoffmaterial, aus dem der Behälter 1 durch das Rotationssinterverfahren hergestellt wird, vollständig umhüllt, wobei die Umhüllung 5 auf der Innenseite der Behälterwand eine Wandstärke aufweist, die zum einen gewährleistet, dass das Rohr 2 sicher vor aggressiver Flüssigkeit geschützt wird und zum anderen den Wärmeübergang vom Rohr 2 zur aufgenommenen Flüssigkeit nicht übermäßig verschlechtert. Weiterhin wird die Umhüllung 5 so ausgebildet, dass Hinterschneidungen vermieden werden. Hierzu wird auf die Fig. 5 verwiesen, die zu Verständniszwecken angefügt wurde, jedoch nicht die Erfindung darstellt.

Wie gut aus Fig. 5 zu sehen, können bei Umhüllung des Rohrs, insbesondere wenn das Rohr einen kreisförmigen Querschnitt aufweist, im Fußbereich der Umhüllung Hinterschneidungen entstehen, die insbesondere in dem Bereich zwischen zwei Rohrabschnitten ein Frostschadenrisiko mit sich bringen. Kommt es bei einer Gestaltung gemäß Fig. 5 zu einem Einfrieren der Flüssigkeit, besteht das Risiko, dass sich das Flüssigkeitsvolumen, das zwischen den beiden Rohrabschnitten vorliegt, bei Verfestigung in die entstandenen Hinterschneidungen einkrallt und bei der durch das Einfrieren der Flüssigkeit sich ergebenden Volumenvergrößerung nicht genügend ausweichen kann. Somit wird eine hohe Kraft auf die Umhüllungen und damit die eingebetteten Rohre aufgebracht, wodurch es zu Beschädigungen des Behälters 1 kommen kann. Eine derartige Gefährdung wird durch eine Gestalt gemäß Fig. 2 mit hinterschnittsfreier Umhüllung vermieden.

Fig. 3 zeigt ein weiteres Ausführungsbeispiel der Erfindung, bei der für den Behälter 1 ein zweilagiger Aufbau gewählt wurde. Zusätzlich zu dem ersten Kunststoffmaterial, das die Wände des Behälters 1 ausbildet, wird ein zweites Kunststoffmaterial beim Rotationssinterverfahren eingebracht, das sich auf die inneren Wände des Behälters 1 legt und dort eine zweite Kunststoffschicht 6 ausbildet. Die zweite Kunststoffschicht 6 weist eine schaumartige Struktur auf und erhöht die Isolationswirkung beträchtlich, wodurch ein Auskühlen der aufgenommenen Flüssigkeit oder ein Erwärmen der Flüssigkeit deutlich verzögert wird. Vorteilhaft wird dieses zweite Kunststoffmaterial so eingebracht, dass es sich - wie in Fig. 3 dargestellt - auf die Umhüllung 5 der Rohre 2 legt. Es wird also eine ungleichmäßige Wandstärke des zweiten Kunststoffmaterials angestrebt, die im nach innen weisenden Bereich der Umhüllung 5 bzw. des Rohres 2 eine möglichst geringe Stärke aufweist, in dem Eckbereich, also dem Übergangsbereich von Umhüllung 5 zur Seitenwand 4 des Behälters 1 jedoch eine größere Stärke aufweist, wodurch der Eckbereich weiter aufgefüllt wird und sich ein flacher Übergang von der Umhüllung 5 zur Seitenwand 4 ergibt. Durch diesen flachen Übergang wird sicher erreicht, dass die Flüssigkeit beim Einfrieren und der damit verbundenen Volumenvergrößerung einfach ausweichen kann, ohne dass hierdurch Schäden am Behälter 1 verursacht werden.

Fig. 4 zeigt, wie Fig. 1, ein weiteres Ausführungsbeispiel, bei dem ein Rohr 2 Verwendung findet, das ebenfalls geschlungen im Behälter 1 angeordnet ist, wobei die Richtungsänderung der Biegungen unter 180°, im konkreten Ausführungsbeispiel etwa 150°, beträgt und sich somit keine U-förmigen Rohrabschnitte, sondern V-förmige Abschnitte ergeben. Diese V-Form der Rohrabschnitte erleichtert ein Ausweichen des Flüssigkeitsvolumens zwischen den Rohrabschnitten bei Einfrieren desselben in Richtung der Öffnung des V. Die auf die Rohrabschnitte bzw. Umhüllung 5 wirkenden Kräfte beim Einfrieren der Flüssigkeit werden somit weiter vermindert.

## Patentansprüche

1. Behälter für aggressive Flüssigkeiten mit Möglichkeit zur Erwärmung oder Kühlung der Flüssigkeit, **dadurch gekennzeichnet, dass** der Behälter (1) als Hohlkörper einstückig aus Kunststoffmaterial mittels eines Rotationssinterverfahrens hergestellt ist, wobei in zumindest eine Wand (4) des Behälters (1) ein Rohr aus Metall (2) eingearbeitet ist, das im Bereich des Behälters (1) vollstandig von dem Kunststoffmaterial umhüllt ist.

2. Behälter nach Anspruch 1, **dadurch gekennzeichnet, dass** das Rohr (2) einen runden Querschnitt aufweist.

3. Behälter nach Anspruch 1 oder 2, **dadurch gekennzeichnet, dass** das Rohr (2) so umhüllt ist, dass keine Hinterschneidungen bestehen.

4. Behälter nach Anspruch 3, **dadurch gekennzeichnet, dass** das Rohr (2) so umhüllt ist, dass es zum Innenraum des Behälters (1) vorsteht, wobei die Umhüllung (5) zur Behälterwand (4) schräg ausläuft.

5. Behälter nach einem der Ansprüche 1 bis 4, **dadurch gekennzeichnet, dass** das Rohr (2) so im Behälter (1) eingebettet ist, dass die Außenwände des Behälters (1) eben sein können.

6. Behälter nach einem der Ansprüche 1 bis 5, **dadurch gekennzeichnet, dass** der Behälter (1) im Innenraum mit einer zweiten Kunststoffschicht (6) versehen ist, die eine schaumartige Struktur aufweist.

7. Behälter nach Anspruch 6, **dadurch gekennzeichnet, dass** die zweite Kunststoffschicht (6) auch durch das Rotationssinterverfahren ausgebildet ist.

8. Behälter nach Anspruch 7, **dadurch gekennzeichnet, dass** die zweite Kunststoffschicht (6) das Rohr (2) umhüllt.

9. Behälter nach Anspruch 8, **dadurch gekennzeichnet, dass** die Wandstärke der zweiten Kunststoffschicht (6) zumindest in bestimmten Bereichen, in denen diese das Rohr (2) umhüllt, geringer ist als in anderen Bereichen.

10. Behälter nach Anspruch 9, **dadurch gekennzeichnet, dass** die Wandstärke der zweiten Kunststoffschicht (6) in den genannten bestimmten Bereichen geringer ist als im Bereich der das Rohr (2) nicht aufweisenden Seitenwände des Behälters (1).

11. Behälter nach einem der Ansprüche 1 bis 10, **dadurch gekennzeichnet, dass** das Rohr (2) im Bereich des Behälters (1) zumindest eine Biegung aufweist.

12. Behälter nach Anspruch 11, **dadurch gekennzeichnet, dass** das Rohr (2) im Bereich des Behälters (1) geschlungen ausgeführt ist.

13. Behälter nach Anspruch 11 oder 12, **dadurch gekennzeichnet, dass** das Rohr (2) im Bereich des Behälters (1) mäanderförmig ausgeführt ist.

14. Behälter nach einem der Ansprüche 11 bis 13, **dadurch gekennzeichnet, dass** das Rohr (2) im Bereich des Behälters (1) zumindest eine Biegung mit einer Richtungsänderung von unter 180° aufweist.

15. Behälter nach Anspruch 14, **dadurch gekennzeichnet, dass** die Richtungsänderung bevorzugt 120° bis 160° beträgt.

16. Behälter nach einem der Ansprüche 1 bis 15, **dadurch gekennzeichnet, dass** das Rohr (2) aus dem Behälter (1) herausgeführt ist und außerhalb des Behälters (1) Anschlussstücke (3) aufweist.

## Claims

1. A container for aggressive fluids with the possibility of heating or cooling the fluid, **characterised in that** the container (1) is produced in a single piece as a hollow article by means of a rotation sintering process, wherein a tube made of metal (2) is incorporated into at least one wall (4) of the container (1), which tube is completely sheathed by the plastics material in the zone of the container (1).

2. A container according to claim 1, **characterised in that** the tube (2) has a round cross-section.

3. A container according to claim 1 or claim 2, **characterised in that** the tube (2) is sheathed in such a manner that there are no undercuts.

4. A container according to claim 3, **characterised in that** the tube (2) is sheathed in such a manner that it protrudes into the interior of the container (1), wherein the sheathing (5) slopes down to the container wall (4).

5. A container according to any one of claims 1 to 4, **characterised in that** the tube (2) is embedded in the container (1) in such a manner that the outer walls of the container (1) can be level.

6. A container according to any one of claims 1 to 5, **characterised in that** the container (1) is provided in its interior with a second plastics layer (6) which has a foam-like structure.

7. A container according to claim 6, **characterised in that** the second plastics layer (6) is also formed by the rotation sintering process.

8. A container according to claim 7, **characterised in that** the second plastics layer (6) sheathes the tube (2).

9. A container according to claim 8, **characterised in that** the wall thickness of the second plastics layer (6) is less at least in specific zones, in which it sheathes the tube (2), than in other zones.

10. A container according to claim 9, **characterised in that** the wall thickness of the second plastics layer (6) in the stated specific zones is less than in the zone of the container (1) side walls which do not comprise the tube (2).

11. A container according to any one of claims 1 to 10, **characterised in that** the tube (2) comprises at least one bend in the zone of the container (1).

12. A container according to claim 11, **characterised in that** the tube (2) is configured as a loop in the zone of the container (1).

13. A container according to claim 11 or claim 12, **characterised in that** the tube (2) is configured in zigzag manner in the zone of the container (1).

14. A container according to any one of claims 11 to 13, **characterised in that** the tube (2) comprises at least one bend with a change of direction of less than 180° in the zone of the container (1).

15. A container according to claim 14, **characterised in that** the change of direction preferably amounts to 120° to 160°.

16. A container according to any one of claims 1 to 15, **characterised in that** the tube (2) passes out of the container (1) and comprises connection pieces (3) outside the container (1).

## Revendications

1. Récipient pour liquides agressifs, avec possibilité de chauffage ou de refroidissement du liquide, **caractérisé en ce que** le récipient (1) est fabriqué comme un corps creux d'une seule pièce en matière synthétique au moyen d'un procédé de frittage par rotation, un tube en métal (2) étant introduit dans au moins une paroi (4) du récipient (1), qui, dans la zone du récipient, est entièrement enrobé dans la matière synthétique.

2. Récipient selon la revendication 1, **caractérisé en ce que** le tube (2) présente une section circulaire.

3. Récipient selon la revendication 1 ou 2, **caractérisé en ce que** le tube (2) est enrobé de telle manière qu'il n'y a pas de contre dépouille.

4. Récipient selon la revendication 3, **caractérisé en ce que** le tube (2) est enrobé de telle manière qu'il fait saillie vers l'intérieur du récipient, l'enrobage (5) évoluant en biais vers la paroi (4) du récipient.

5. Récipient selon l'une des revendications 1 à 4, **caractérisé en ce que** le tube (2) est incrusté dans le récipient (1) de telle manière que les parois extérieures du récipient (1) peuvent être planes.

6. Récipient selon l'une des revendications 1 à 4, **caractérisé en ce que** le récipient (1) est pourvu dans l'espace intérieur d'une seconde couche de matière synthétique (6) qui présente une structure en mousse.

7. Récipient selon la revendication 6, **caractérisé en ce que** la seconde couche de matière synthétique (6) est aussi formée avec le procédé de frittage par rotation.

8. Récipient selon la revendication 7, **caractérisé en ce que** la seconde couche de matière synthétique (6) entoure le tube (2).

9. Récipient selon la revendication 8, **caractérisé en ce que** l'épaisseur de paroi de la seconde couche de matière synthétique (6), au moins dans certaines zones dans lesquelles elle enrobe le tube (2), est plus faible que dans les autres zones.

10. Récipient selon la revendication 9, **caractérisé en ce que** l'épaisseur de paroi de la seconde couche de matière synthétique (6), dans lesdites certaines zones est plus faible que dans la zone des parois latérales du récipient (1) ne présentant pas le tube (2).

11. Récipient selon l'une des revendications 1 à 10, **caractérisé en ce que** le tube (2)présente au moins une courbure dans la zone du récipient (1).

12. Récipient selon la revendication 11, **caractérisé en ce que** le tube (2) est réalisé sinueux dans la zone du récipient (1).

13. Récipient selon la revendication 11 ou 12, **caractérisé en ce que** le tube (2) est réalisé en méandres dans la zone du récipient (1).

14. Récipient selon l'une des revendications 11 à 13, **caractérisé en ce que** le tube (2) présente, dans la zone du récipient, au moins une courbure avec un changement de direction inférieurs à 180°.

15. Récipient selon la revendication 14, **caractérisé en ce que** le changement de direction fait de préférence 120° à 160°.

16. Récipient selon l'une des revendications 1 à 15, **caractérisé en ce que** le tube (2) est guidé hors du récipient (1) et présente à l'extérieur du récipient (1) des ajutages (3).
